# FASCICULE DE BREVET EUROPEEN

(11) **EP 1 603 731 B1**
(45) Date de publication et mention de la délivrance du brevet: **25.04.2007**
(21) Numéro de dépôt: 04716635.0
(22) Date de dépôt: 03.03.2004
(51) Int. Cl.: B29C 47/90, B29C 47/92

(54) **PROCEDE DE FABRICATION EN CONTINU DE TUBES EN MATIERE PLASTIQUE AVEC ETIRAGE BI-AXIAL ET LIGNE DE FABRICATION POUR CE PROCEDE.**
VERFAHREN ZUR KONTINUIERLICHEN HERSTELLUNG VON KUNSTSTOFFROHREN DURCH BIAXIALES ZIEHEN UND FERTIGUNGSSTRASSE ZUR DURCHFÜHRUNG DES VERFAHRENS
METHOD FOR CONTINUOUSLY PRODUCING PLASTIC TUBES BY BIAXIAL DRAWING AND A PRODUCTION LINE FOR CARRYING OUT SAID METHOD

(30) Priorité: 07.03.2003 FR 0302824
(43) Date de publication de la demande: 14.12.2005
(73) Titulaire: Alphacan, 78170 La Celle-Saint-Cloud (FR)
(72) Inventeur: PREVOTAT, Bernard, F-92430 Marnes la Coquette (FR)
(74) Mandataire: Michardière, Bernard
(86) Numéro de dépôt international: PCT/FR2004/000501
(87) Numéro de publication internationale: WO 2004/080682

(56) Documents cités:
- WO-A-01/72499
- US-A- 3 772 118
- US-A- 3 812 230
- US-A- 4 189 288
- US-A- 4 472 343
- US-A- 4 749 346
- US-A- 4 818 467

## Description

L'invention est relative à un procédé de fabrication en continu de tubes en matière plastique avec étirage bi-axial, suivant lequel on réalise une ébauche par extrusion, on amène cette ébauche à température d'orientation moléculaire, on lui fait subir une dilatation radiale en la soumettant à une pression interne de fluide appliquée entre deux obturateurs distants axialement, et on assure un calibrage et un refroidissement tout en exerçant une traction axiale sur le tube en sortie.

On sait que les propriétés finales de la matière du tube dépendent de la dilatation radiale. Pour un diamètre extérieur et une épaisseur donnés de l'ébauche, plus la dilatation radiale est importante, et plus les caractéristiques mécaniques de la matière du tube fini sont élevées. Toutefois, avec des dilatations radiales relativement importantes, des variations d'épaisseur sur une même circonférence peuvent apparaître dans le tube fini, ce qui correspond à une excentration de ce tube. En outre des élongations longitudinales variables peuvent apparaître, ce qui n'est pas compatible avec les spécifications du produit.

FR-A-2 806 956, au nom de la société demanderesse, concerne un procédé de fabrication en continu de tubes en matière plastique du genre défini précédemment.

US 5 948 332, qui correspond à WO 95/25627, concerne également un procédé de fabrication en continu de tubes en matière plastique avec étirage bi-axial, mais la dilatation radiale de l'ébauche est obtenue en faisant passer cette ébauche en permanence sur un mandrin. Pour assurer une certaine uniformité de l'épaisseur du tube suivant toute sa section, ce document prévoit des moyens de régulation de l'effort résistant rencontré par le tube lorsqu'il passe sur le mandrin. Ces moyens font intervenir des panneaux chauffants disposés en secteurs autour de l'ébauche et un système d'asservissement sensible à une mesure d'épaisseur du tube fini . La variation de la température des panneaux chauffants est commandée selon les secteurs. Cette installation est complexe et l'utilisation de panneaux chauffants agissant de l'extérieur ne conduit pas à une homogénéité de caractéristiques de la matière dans toute l'épaisseur de la paroi. Le temps de réponse, lorsque des modifications sont commandées, est relativement long en raison du temps demandé par les échanges thermiques.

L'invention a pour but, surtout, de fournir un procédé de fabrication en continu de tubes en matière plastique qui permet de supprimer ou tout au moins de réduire sensiblement l'excentration du tube fini et les variations d'élongation longitudinale, même lors d'une dilatation radiale relativement importante .

Selon l'invention, un procédé de fabrication en continu de tubes en matière plastique avec étirage bi-axial, du genre défini précédemment, est caractérisé par le fait qu'on applique de l'extérieur contre la paroi de l'ébauche dans au moins une zone soumise à la dilatation radiale une pression antagoniste à la pression interne, cette pression antagoniste étant plus faible que la pression interne pour ne pas faire obstacle à la dilatation, mais étant suffisante pour assurer une croissance maîtrisée de la dilatation, avec une épaisseur de matière sensiblement constante sur une même circonférence.

La pression antagoniste peut n'être appliquée que dans les zones localisées les plus susceptibles d'une croissance non maîtrisée en l'absence de cette pression antagoniste.

La pression antagoniste peut être exercée mécaniquement. Cette pression est avantageusement exercée à l'entrée du calibreur.

L'invention est également relative à une ligne de fabrication pour la mise en oeuvre du procédé défini précédemment, comportant : une extrudeuse pour la formation d'une ébauche ; au moins un bac de mise à température d'orientation moléculaire de l'ébauche ; un dispositif de dilatation radiale de l'ébauche ; un calibreur et un dispositif de refroidissement du tube, et au moins une tireuse aval à la sortie du tube, cette installation étant caractérisée par le fait qu'elle comporte, dans la zone de dilatation radiale, des moyens pour exercer une pression antagoniste contre la paroi extérieure de l'ébauche.

Avantageusement, les moyens pour exercer la pression antagoniste contre la paroi extérieure de l'ébauche sont des moyens mécaniques.

Ces moyens mécaniques peuvent être constitués par des roulettes ou des galets, ayant avantageusement une bande de roulement en matière plastique. L'axe d'une roulette peut être supporté par une console montée rotative autour d' un axe orthogonal à la direction longitudinale du tube. La roulette peut être appliquée par un moyen élastique ou par une vis de pression contre la paroi de l'ébauche.

Quatre roulettes réparties sur la circonférence peuvent être prévues pour un diamètre moyen de tube. Pour des diamètres plus importants, six roulettes voire plus peuvent être prévues, réparties suivant la circonférence.

Avantageusement, un dispositif d'asservissement est prévu pour moduler la pression antagoniste en fonction de l'épaisseur du tube mesurée en aval .

L'invention consiste, mises à part les dispositions exposées ci-dessus, en un certain nombre d'autres dispositions dont il sera plus explicitement question ci-après à propos d'exemples de réalisation décrits en détail avec référence aux dessins annexés, mais qui ne sont nullement limitatifs. Sur ces dessins :
Fig.1 est un schéma en coupe d'une partie d'une ligne de fabrication mettant en oeuvre le procédé de l'invention.
Fig.2 est une vue en perspective de l'entrée du calibreur muni de roulettes pour exercer la pression antagoniste.
Fig.3 est un schéma d'une variante de réalisation des moyens pour exercer la poussée antagoniste ,
Fig.4 est un schéma d'une autre variante de réalisation des moyens pour exercer la poussée antagoniste, et
Fig.5 est une courbe représentative de l'augmentation du diamètre d'un tube porté en abscisse et exprimé en millimètres, selon la pression interne, exprimée en bars, portée en ordonnée.

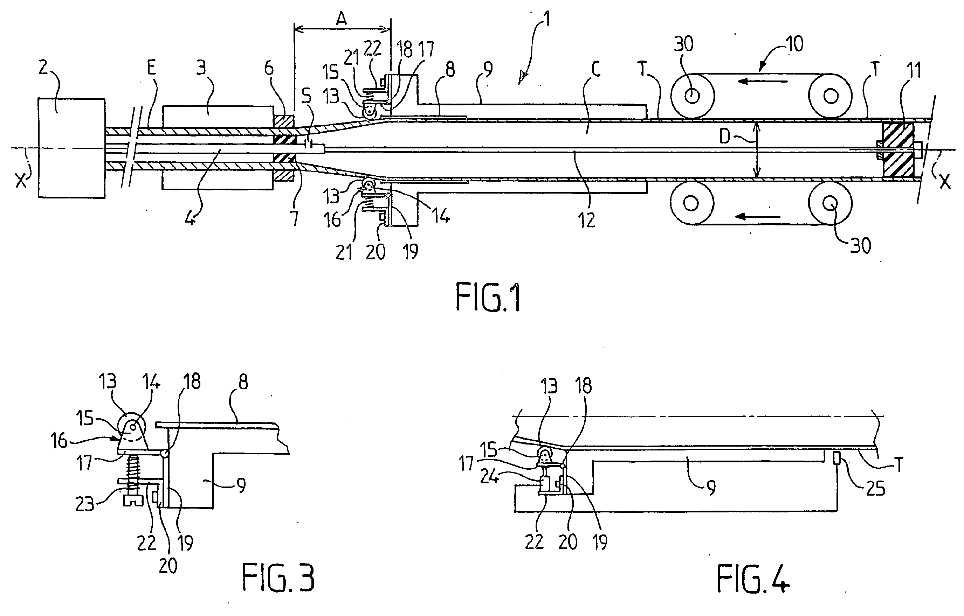

En se reportant aux dessins, notamment à Fig.1, on peut voir une ligne de fabrication 1 mettant en oeuvre le procédé de l'invention. La production se déroule en continu d'amont, sur la gauche de Fig.1, en aval, vers la droite de Fig.1.

La ligne de fabrication comprend, d'une manière connue par exemple d'après FR-A-2 806 956, un ensemble 2 schématiquement représenté comprenant une extrudeuse alimentée en matière thermoplastique à partir d'une trémie. Une ébauche E de tube sort à une température relativement élevée, de l'ordre de 150°C ou plus, et traverse un ou plusieurs bacs de refroidissement tels que 3, contenant généralement de l'eau, pour abaisser sensiblement la température de l'ébauche E.

Un tube métallique 4, coaxial à l'ébauche E, est fixé à l'extrudeuse et s'étend vers la droite selon Fig. 1. Ce tube 4 comporte, vers son extrémité axiale fermée éloignée de l'extrudeuse, au moins une ouverture radiale 5.

Le dernier bac 3 thermorégulé, c'est-à-dire celui situé le plus à droite selon Fig.1, est prévu pour porter l'ébauche E à une température située dans la plage des températures d'orientation moléculaire. Pour le PVC, cette température se situe dans une plage de 90°C à 110°C.

A la sortie du bac 3 est fixée une bague 6 permettant de plaquer l'ébauche sur un bouchon interne 7 engagé autour du tube 6, en amont de la ou des ouvertures 5.

L'ébauche E se trouve à l'air libre dans une zone A située axialement entre la bague 6 et l'entrée d'un calibreur 8 schématiquement représenté. Ce calibreur 8 est disposé dans un bac de refroidissement 9, par exemple à aspersion d'eau sous vide. A la sortie du bac 9, le tube T, à l'état fini, passe dans une tireuse 10 qui exerce l'effort de traction nécessaire sur toute la ligne pour l'entraînement du tube et de l'ébauche.

En régime permanent de fonctionnement, un bouchon aval 11 est accroché, par exemple par un câble 12, à l'extrémité fermée du tube 4. Le bouchon interne 7 et le bouchon 11 constituent deux obturateurs distants axialement définissant une chambre fermée C dans laquelle un fluide sous pression, de préférence de l' air, est introduit par la conduite 4 et l'orifice 5.

La pression interne de fluide provoque une dilatation radiale de l'ébauche à la sortie de la bague 6 pour atteindre le diamètre interne du calibreur 8 comme illustré schématiquement sur Fig.1, lorsque le régime permanent est établi.

Pour la phase transitoire de démarrage on peut procéder, comme décrit dans FR-A-2 806 956.

Les propriétés finales de la matière du tube T dépendent de la dilatation radiale de l'ébauche entre la bague 6 et le calibreur 8. Plus cette dilatation radiale est importante, et plus les caractéristiques mécaniques de la matière du tube sont élevées.

Mais on s'est aperçu qu'au-delà d'un certain taux de dilatation radiale, la "bulle" générée dans la zone A se déforme et perd sa symétrie de révolution autour de son axe géométrique. Il en résulte une excentration du tube final, avec des épaisseurs différentes sur une même circonférence, et des élongations longitudinales variables, non compatibles avec les spécifications du produit.

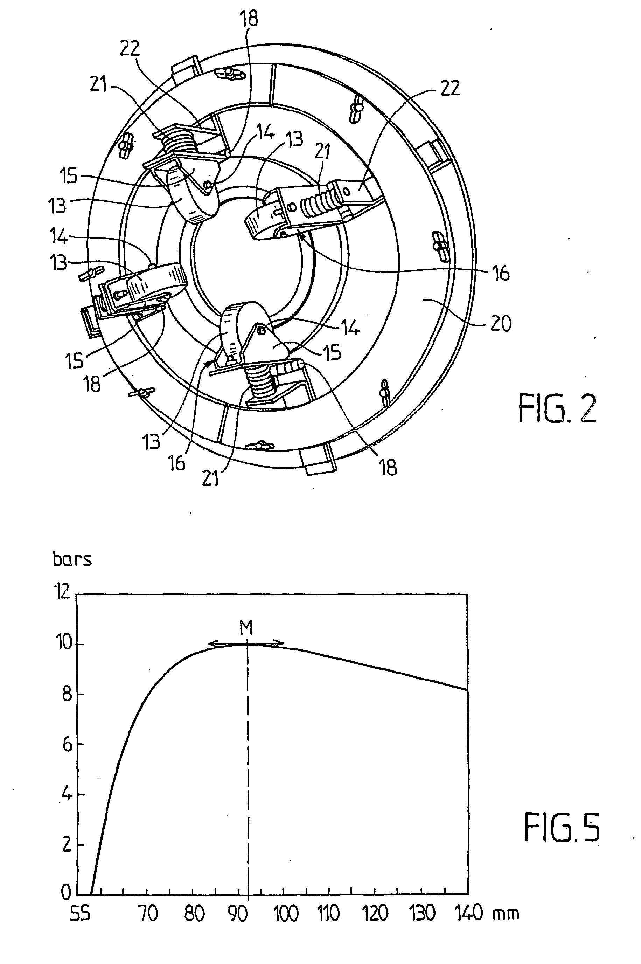

Ces constatations expérimentales ont pu être expliquées à l'aide du diagramme de Fig.5 illustrant la variation de diamètre extérieur d'une ébauche E selon la pression interne en bars . L'ébauche considérée a un diamètre extérieur d'environ 58 mm lorsque la pression interne relative est nulle. Bien entendu, les explications sont valables pour des diamètres différents.

La courbe de Fig.5 passe par un maximum M , avec tangente parallèle à l'axe des abscisses, pour un diamètre extérieur d'environ 92 mm et une pression interne de 10 bars. Pour les diamètres inférieurs à celui correspondant au point M, la relation pression/déformation est croissante. Au-delà du point M, la relation pression/déformation devient décroissante. Ce phénomène est principalement lié à un étirement de la matière au-delà du seuil d'écoulement. Il en résulte une sorte de phase instable et mal maîtrisée. La pression interne qu'il avait fallu appliquer pour gonfler l'ébauche jusqu'au maximum M, correspondant au seuil d'écoulement, devient supérieure à celle qui permet à la matière de continuer de s'allonger radialement.

Pour des diamètres au-delà de celui correspondant au point M, la croissance de la bulle n'est pas bien maîtrisée, ce qui explique les déformations dissymétriques de la section.

Pour surmonter cet obstacle et, notamment, pour pouvoir bénéficier d'un taux de dilatation radiale supérieur à celui correspondant au point M, sans pour autant créer des différences d'épaisseur suivant la section circulaire, l'invention prévoit de réduire la contrainte dans la paroi de l'ébauche en appliquant par l'extérieur une pression antagoniste, ou contre-pression, qui vient se déduire de la pression interne.

Une solution simple consiste à appliquer la pression antagoniste mécaniquement par des roulettes 13 disposées à l'entrée du calibreur 8. De préférence, la bande de roulement des roulettes 13 est en matière plastique. L'axe de rotation 14 des roulettes est orthogonal à l'axe géométrique X-X de l'ébauche E. L'axe 14 (Fig.2) est supporté, à chaque extrémité, par un palier prévu dans une joue 15 d'une chape 16 coiffant la roulette 13 du côté opposé à l'ébauche. La chape 16 est fixée sur une plaquette 17 sensiblement parallèle à l'axe géométrique X-X de l'ébauche E. La plaquette 17 est articulée à son extrémité éloignée de la roulette 13, et proche du calibreur 8, sur un axe transversal 18 orthogonal à l'axe géométrique X-X de l'ébauche. L'axe 18 est supporté par une plaque 19 dont le plan est perpendiculaire à l'axe X-X. La plaque 19 est bloquée contre la face d'entrée du calibreur 8 ou du bac 9, par exemple par serrage à l'aide d'une couronne 20 (Fig.2) pressée par des vis contre la face d'entrée . En desserrant la couronne 20, il est possible de régler la position angulaire des plaques 19 autour de l'axe géométrique X-X.

La roulette 13 et la plaquette 17 sont avantageusement soumises à la poussée d'un ressort de compression 21, en direction de l'axe géométrique X-X. Ce ressort 21 est en appui, à une extrémité, contre la face de la plaquette 17 opposée à la roulette 13 et, à son autre extrémité, contre une lame 22 fixée sur la plaque 19.

En variante, comme illustré sur Fig.3, le ressort 21 peut être remplacé par une vis de pression 23 engagée dans un trou fileté de la lame 22 et appuyant contre la plaquette 17. Le réglage de la pression exercée par la roulette 13 s'obtient par vissage ou dévissage de la vis 23.

Selon une autre variante illustrée sur Fig.4, le ressort 21 peut être remplacé par un vérin pneumatique ou hydraulique 24 dont la pression de fluide est asservie à l'épaisseur du tube T. Cette épaisseur est détectée par un capteur 25, notamment à ultra-sons, situé par exemple en sortie du bac de refroidissement 9. Le vérin 24 est disposé, comme le ressort 21, entre la lame 22 et la plaquette 17. Le vérin 24 applique la roulette 13 contre la paroi de la bulle suivant une pression fonction de l'épaisseur en sortie, de manière à maintenir cette épaisseur à la valeur souhaitée. Cette variante permet de réguler automatiquement la production en continu d'un tube, avec une excentration minimale.

Selon une autre variante non représentée, les galets 13 peuvent être remplacés par de simples doigts à bout arrondi, en une matière à faible coefficient de frottement, appuyant contre la paroi externe de l'ébauche E. Selon encore une autre possibilité, la pression antagoniste extérieure serait exercée à l'aide d'un fluide agissant contre des zones de la paroi extérieure de l'ébauche

La pression antagoniste, ou contre-pression, peut être localisée dans les zones de croissance non maîtrisée de la bulle. Grâce à la consistance et à la rigidité de la matière, il est possible de limiter les zones d'intervention à un petit nombre, dépendant du diamètre du tube.

Dans l'exemple illustré sur Fig.2, les roulettes 13 sont prévues dans quatre zones sensiblement à angle droit. Une telle solution peut s'appliquer à une ébauche dont le diamètre de bulle (diamètre à l'entrée du calibreur 8) est de l'ordre de 100 mm. Selon Fig.2 les quatre roulettes 13 ont été installées sur chacune des quatre génératrices haute, basse, droite et gauche de l'ébauche. Lorsque la bulle est gonflée, ces roulettes 13 sont positionnées au contact de la matière. L'épaisseur du tube bi-orienté sur les quatre génératrices correspondant aux roulettes 13 est mesurée en aval et comparée à des valeurs objectif du cahier des charges. Une pression, par exemple réglée manuellement, est alors appliquée à la paroi de la bulle par l'intermédiaire de ce système sur la ou les génératrices en contact avec la roulette.

Pour un diamètre de l'ordre de 200 mm, on prévoit de préférence six zones avec roulettes de contre-pression.

La contre-pression extérieure doit être appliquée de manière à ne générer pratiquement aucun frottement ni refroidissement localisé de la couche de surface de la paroi du tube.

On pourrait envisager de faire supporter chaque roulette par une couronne montée rotative autour de l'axe X-X, et d'asservir la position angulaire de la roulette autour de l'axe X-X en fonction de la position angulaire d'une variation d'épaisseur détectée par des capteurs 25 répartis autour du tube T.

Le fonctionnement de la ligne de fabrication et plus particulièrement des moyens de contre-pression formés par les roulettes 13 résulte des explications qui précèdent.

Selon l'invention, on peut assurer une épaisseur quasiment uniforme sur toutes les sections circulaires d'un tube, même s'il a subi une dilatation radiale au-delà du point M (Fig.5). A partir d'une ébauche de diamètre extérieur donnée, on élargit ainsi les possibilités de diamètre extérieur final. En particulier, on peut obtenir des tubes de classe supérieure (le niveau de la classe dépend de l'augmentation relative du diamètre de l'ébauche) présentant des propriétés mécaniques supérieures.

A titre indicatif et non limitatif, la fluctuation de l'épaisseur d'un tube dans une section circulaire qui peut aller de 0.3 à 0.5 mm pour un tube de diamètre 100 mm environ selon un procédé de l'état de la technique, est réduite à moins de 0.1 mm avec l'invention.

## Revendications

1. Procédé de fabrication en continu de tubes en matière plastique avec étirage bi-axial, suivant lequel on réalise une ébauche (E) par extrusion, on amène cette ébauche à température d'orientation moléculaire, on lui fait subir une dilatation radiale en la soumettant à une pression interne de fluide appliquée entre deux obturateurs (7,11) distants axialement, et on assure un calibrage (8) et un refroidissement (9) tout en exerçant une traction axiale sur le tube en sortie, **caractérisé par le fait qu'**on applique (13) de l'extérieur contre la paroi de l'ébauche dans au moins une zone soumise à la dilatation radiale une pression antagoniste à la pression interne, cette pression antagoniste étant plus faible que la pression interne pour ne pas faire obstacle à la dilatation, mais étant suffisante pour assurer une croissance maîtrisée de la dilatation, avec une épaisseur de matière sensiblement constante sur une même circonférence.

2. Procédé selon la revendication 1, **caractérisé par le fait que** la pression antagoniste n'est appliquée que dans les zones localisées les plus susceptibles d'une croissance non maîtrisée en l'absence de cette pression antagoniste.

3. Procédé selon la revendication 1 ou 2, **caractérisé par le fait que** la pression antagoniste est exercée à l'entrée d'un calibreur (8).

4. Procédé selon l'une des revendications précédentes , **caractérisé par le fait que** la pression antagoniste est exercée mécaniquement.

5. Ligne de fabrication pour la mise en oeuvre d'un procédé selon l'une des revendications 1 à 4, comportant : une extrudeuse (2) pour la formation d'une ébauche ; au moins un bac (3) de mise à température d'orientation moléculaire de l'ébauche ; un dispositif (4, 5, 7, 11) de dilatation radiale de l'ébauche ; un calibreur (8) et un dispositif de refroidissement (9) du tube, et au moins une tireuse aval (10) à la sortie du tube, **caractérisée par le fait qu'**elle comporte, dans la zone (A) de dilatation radiale, des moyens (13,21; 13,23; 13,24) pour exercer une pression antagoniste contre la paroi extérieure de l'ébauche (E).

6. Ligne de fabrication selon la revendication 5, **caractérisée par le fait que** les moyens pour exercer une pression antagoniste contre la paroi extérieure de l'ébauche sont des moyens mécaniques (13).

7. Ligne de fabrication selon la revendication 6, **caractérisée par le fait que** les moyens mécaniques sont constitués par des roulettes (13).

8. Ligne de fabrication selon la revendication 7, **caractérisée par le fait que** l'axe (14) d'une roulette est supporté par une console (16) montée rotative autour d' un axe (18) orthogonal à la direction longitudinale (X-X) du tube .

9. Ligne de fabrication selon la revendication 8, **caractérisée par le fait que** la roulette (13) est appliquée par un moyen élastique (21) contre la paroi de l'ébauche.

10. Ligne de fabrication selon la revendication 8, **caractérisée par le fait que** la roulette (13) est appliquée par un vérin (24) à fluide, et un dispositif d'asservissement est prévu pour moduler la pression antagoniste en fonction de l'épaisseur du tube mesurée (25) en aval .

11. Ligne de fabrication selon la revendication 7, **caractérisée par le fait que** quatre roulettes (13) réparties sur la circonférence sont prévues pour un diamètre moyen de tube.

## Claims

1. A method for the continuous production of plastic tubes with biaxial drawing, whereby a blank (E) is produced by extrusion, this blank is brought to molecular orientation temperature, it is made to undergo radial expansion by subjecting it to an internal fluid pressure applied between two axially distant obturators (7, 11), and is sized (8) and cooled (9) while at the same time exerting axial tension on the exiting tube, **characterized in that** a pressure antagonistic to the internal pressure is applied (13) from the outside against the wall of the blank in at least one region subjected to the radial expansion, this antagonistic pressure being lower than the internal pressure so as not to impede the expansion, but being high enough to ensure a controlled increase in the expansion, with a more or less constant material thickness over the same circumference.

2. The method as claimed in claim 1, **characterized in that** the antagonistic pressure is applied only to the localized regions most susceptible to an uncontrolled increase in the absence of this antagonistic pressure.

3. The method as claimed in claim 1 or 2, **characterized in that** the antagonistic pressure is exerted at the entry to a sizing device (8).

4. The method as claimed in one of the preceding claims, **characterized in that** the antagonistic pressure is exerted mechanically.

5. A production line for implementing a method as claimed in one of claims 1 to 4, comprising: an extruder (2) for forming a blank; at least one bath (3) for bringing the blank to molecular orientation temperature; a device (4, 5, 7, 11) for radially expanding the blank; a device (8) for sizing and a device (9) for cooling the tube, and at least one downstream pulling machine (10) at the tube exit, **characterized in that** it comprises, in the radial expansion region (A), means (13, 21,; 13, 23; 13, 24) for exerting an antagonistic pressure against the exterior wall of the blank (E).

6. The production line as claimed in claim 5, **characterized in that** the means for exerting an antagonistic pressure against the exterior wall of the blank are mechanical means (13).

7. The production line as claimed in claim 6, **characterized in that** the mechanical means consist of rollers (13).

8. The production line as claimed in claim 7, **characterized in that** the axle (14) of a roller is supported by a bracket (16) mounted to rotate about an axle (18) orthogonal to the longitudinal direction (X-X) of the tube.

9. The production line as claimed in claim 8, **characterized in that** the roller (13) is pressed by an elastic means (21) against the wall of the blank.

10. The production line as claimed in claim 8, **characterized in that** the roller (13) is pressed by a fluid ram (24), and an automatic-control device is provided for modulating the antagonistic pressure according to the tube thickness measured (25) downstream.

11. The production line as claimed in claim 7, **characterized in that** four rollers (13) distributed about the circumference are provided for an average tube diameter.

## Patentansprüche

1. Verfahren zur kontinuierlichen Herstellung von Kunststoffrohren mit biaxialer Streckung, bei dem durch Extrusion ein Rohteil (E) hergestellt wird, das Rohteil auf eine Molekülorientierungstemperatur gebracht wird, es einer radialen Dehnung durch Beaufschlagung mit einem Fluidinnendruck unterzogen wird, welcher zwischen zwei axial entfernt angeordneten Verschlüssen (7, 11) aufgebracht wird, und eine Kalibrierung (8) und eine Kühlung (9) sichergestellt wird, alles unter Anwendung eines axialen Zuges auf das Rohr am Ausgang, **dadurch gekennzeichnet, dass** auf die Wand des Rohteils in mindestens einer der radialen Dehnung unterzogenen Zone von außen ein Gegendruck zu dem Innendruck aufgebracht wird (13), wobei dieser Gegendruck geringer ist als der Innendruck, um kein Hindernis für die Dehnung zu bilden, jedoch ausreicht, um eine kontrollierte Zunahme der Dehnung zu gewährleisten, wobei die Materialdicke bei gleichem Umfang im wesentlichen konstant bleibt.

2. Verfahren nach Anspruch 1, **dadurch gekennzeichnet, dass** der Gegendruck lediglich in den begrenzten Zonen aufgebracht wird, die ohne den Gegendruck für eine nicht kontrollierte Zunahme am anfälligsten sind.

3. Verfahren nach Anspruch 1 oder 2, **dadurch gekennzeichnet, dass** der Gegendruck an Eingang eines Kalibrierers (8) aufgebracht wird.

4. Verfahren nach einem der vorhergehenden Ansprüche, **dadurch gekennzeichnet, dass** der Gegendruck mechanisch aufgebracht wird.

5. Herstellungsstrasse zur Durchführung des Verfahrens nach einem der Ansprüche 1 bis 4, mit: einem Extruder (2) zum Herstellen eines Rohteils; einem Behälter (3), um das Rohteil auf die Molekülorientierungstemperatur zu bringen; einer Vorrichtung (4, 5, 7, 11) zum radialen Dehnen des Rohteils; einem Kalibrierer (8) und einer Abkühlvorrichtung (9) für das Rohr, und mindestens einer stromabwärtigen Zugvorrichtung (10) am Rohraustritt, **dadurch gekennzeichnet, dass** sie in der Zone (A) der radialen Dehnung Einrichtungen (13, 21; 13, 23; 13, 24) zum Aufbringen eines Gegendrucks auf die Außenwand des Rohteils (E) aufweist.

6. Herstellungsstraße nach Anspruch 5, **dadurch gekennzeichnet, dass** die Einrichtungen zum Aufbringen eines Gegendrucks auf die Außenwand des Rohteils mechanische Einrichtungen (13) sind.

7. Herstellungsstraße nach Anspruch 6, **dadurch gekennzeichnet, dass** die mechanischen Einrichtungen durch Rollen (13) gebildet sind.

8. Herstellungsstraße nach Anspruch 7, **dadurch gekennzeichnet, dass** die Achse (14) einer Rolle durch einen Träger (16) gestützt ist, der um eine orthogonal zur Längsrichtung (X-X) des Rohres verlaufende Achse (18) drehbar angebracht ist.

9. Herstellungsstraße nach Anspruch 8, **dadurch gekennzeichnet, dass** die Rolle (13) mittels einer elastischen Einrichtung (21) gegen die Wand des Rohteils aufgebracht wird.

10. Herstellungsstraße nach Anspruch 8, **dadurch gekennzeichnet, dass** die Rolle (13) durch einen Fluidzylinder (24) aufgebracht wird, und dass eine Steuervorrichtung zum Anpassen des Gegendrucks in Abhängigkeit von der stromabwärts gemessenen Dicke des Rohres (25) vorgesehen ist.

11. Herstellungsstraße nach Anspruch 7, **dadurch gekennzeichnet, dass** bei einem mittleren Durchmesser des Rohres vier über den Umfang verteilte Rollen (13) vorgesehen sind.
